# EUROPÄISCHE PATENTSCHRIFT

(11) **EP 0 924 124 B1**
(45) Veröffentlichungstag und Bekanntmachung des Hinweises auf die Patenterteilung: **02.05.2001**
(21) Anmeldenummer: 98122532.9
(22) Anmeldetag: 30.11.1998
(51) Int. Cl.: B60T 7/10

(54) **Feststelleinrichtung für eine Handbremse**
Hand brake locking device
Dispositif de verrouillage d'un frein à main

(30) Priorität: 16.12.1997 DE 29722158 U
(43) Veröffentlichungstag der Anmeldung: 23.06.1999
(73) Patentinhaber: ED. Scharwächter GmbH, 42855 Remscheid (DE)
(72) Erfinder: Mai, Andreas, 42115 Wuppertal (DE); Brückner, Lothar, 71229 Leonberg (DE)
(74) Vertreter: Sparing, Rolf Klaus

(56) Entgegenhaltungen:
- WO-A-96/07569
- FR-A- 1 288 751
- US-A- 3 830 328

## Beschreibung

Die Erfindung betrifft eine Seilzug-Handbremse nach dem Oberbegriff des Patentanspruchs 1.

Bei den üblichen und gebräuchlichen, mittels eines Handbremshebels betätigbaren Handbremsen für Kraftfahrzeuge ist der Handbremshebel um eine Achse schwenkbar an einem an der Fahrzeugkarosserie feststehend befestigten, aus einem Blechpressteil gebildeten Brückenträger angelenkt und soweit es sich nicht um eine selbstverstärkende Handbremse handelt drehsicher mit einem eine begrenzte Länge des Bremsseiles aufnehmenden Teil, insbesondere mit einer Seilscheibe verbunden. Zur Feststellung der angezogenen Handbremse in ihrer vollen oder teilweisen Wirkstellung und gegebenenfalls auch in der der gelösten Handbremse entsprechenden Lösestellung ist dabei dem Handbremshebel eine Feststelleinrichtung zugeordnet, die üblicherweise mittels eines im Handgriffbereich des Handbremshebels angeordneten federbelasteten Druckknopfes auslösbar ist und aus einem am feststehenden Brückenträger angeordneten, konzentrisch zur Anlenkachse des Handbremshebels gekrümmten Zahnsegment sowie einer mit diesem zusammenwirkenden schwenkbar am Körper des Handbremshebels gelagerten Feststellklinke besteht. Der Druckknopf ist dann vermittels eines innerhalb des Handbremshebels angeordneten Gestänges, insbesondere einer Druckstange mit der Feststellklinke gekoppelt. Aus dem Umstand, daß bei diesen Handbremsen das den Druckknopf mit der Feststellklinke verbindende Gestänge mit einer verhältnismäßig hohen Federlast beaufschlagt sein muß, resultiert bei den bekannten Handbremsen naturgemäß, daß die Feststellklinke beim Betätigen der Handbremse ein höchst unerwünschtes geräuschvolles Ratschen der Klinke über die Verzahnung des Zahnsegmentes vollführt.

EP-A-0 509 870 schlägt vor, um das aus dem Zusammenwirken der Feststellklinke mit dem Zahnsegment resultierende Geräusch zu reduzieren oder wenigstens möglichst zu dämpfen, die Zahnklinke mit einer geräuschdämmenden Ummantelung aus einem Kunststoffmaterial zu umgeben oder die Feststellklinke mehrteilig auszubilden. Diese hier nur beispielsweise aufgeführten Maßnahmen erfordern einerseits einen beträchtlichen Kostenaufwand und erbringen andererseits nur eine verhältnismäßig geringfügige Verbesserung hinsichtlich der Geräuschentwicklung durch die Handbremse.

WO-A-96 07 569 beschreibt eine Handbremse mit einem Handbremshebel, der an einem Hebelhalter über eine Schwenkachse montiert ist, und der über Mittel zum Auslösen einer Feststelleinrichtung der Handbremse versehen ist. Weiterhin ist der Handbremshebel mit einer Einrichtung zum Festlegen einer Seilscheibe ausgestattet, an der ein Bremsseil angeschlossen ist und welche beim Anheben durch eine Umfangsverzahnung der Seilscheibe von dem Handbremshebel mitgenommen wird. Die Feststelleinrichtung besteht im wesentlichen aus einer Feststellklinke, die mit einer an dem Hebelhalter angeordneten Verzahnung in Eingriff gelangt und die aufgrund einer Betätigung eines Löseknopfes mit den Mitteln zum Auslösen der Feststelleinrichtung gegenseitig außer Eingriff gebracht werden, um ein Ablegen des Handbremshebels zu ermöglichen. Das an dem Hebelhalter angeordnete Zahnsegment ermöglicht ein gestuftes Festlegen des Handbremshebels und ferner eine individuelle Seilnachstellung durch relatives Verlagern des Hebels und der Umfangsverzahnung.

US-A-3,830,328 beschreibt eine Handbremse mit einem Handbremshebel, welcher zur Betätigung der Bremszylinder aus seiner abgelegten Position in seine angezogene Position verlagerbar ist und zum Lösen aus seiner angezogenen Position wieder in die abgelegte Position verlagerbar ist, wobei die Handbremse in Reaktion auf den Zustand des Zündschlosses eine separate Verriegelung erfahren kann. Der Handbremshebel ist mit einer Seilscheibe gekoppelt, an die zwei Seilzüge angeschlossen sind und die mit einer teilweisen Umfangsverzahnung versehen ist, in die eine an dem Hebelhalter angeordnete, federbeaufschlagte Rastklinke zur Verriegelung der Lage des Handbremshebels eingreift.

FR-A-1 288 751 beschreibt allgemein eine Vielzahl von technischen Realisierungsmöglichkeiten von Kugellagern oder Verriegelungen von gegenseitig verlagerbaren Teilen.

Es ist die Aufgabe der Erfindung, eine Handbremse nach dem Oberbegriff des Anspruchs 1 zu schaffen, die mit geringem Aufwand eine geräuschfreie und sichere Festlegung der Bremse in der ganz oder teilweise angezogenen Stellung sowohl beim Anziehen als auch beim Lösen stufenlos ermöglicht.

Diese Aufgabe wird erfindungsgemäß bei der eingangs genannten Seilzug-Handbremse mit den kennzeichnenden Merkmalen des Anspruchs 1 gelöst.

Die erfindungsgemäße Handbremse ermöglicht eine vergleichsweise kleinbauende Ausführung einer Feststelleinrichtung und führt dabei zu einer rein kraftschlüssigen Festlegung des Handbremshebels in seiner der angezogenen Handbremse entsprechenden Stellung und gestattet damit eine beträchtliche Verringerung des für die Herstellung und Montage der Feststelleinrichtung erforderlichen Aufwandes und eine stufenlose und absolut geräuschfreie Arbeitsweise.

Die erfindungsgemäße Handbremse sieht vor, daß die Seilscheibe und das feststehende Widerlager als zueinander konzentrische Rotationskörper ausgebildet sind, wobei die Seilscheibe als ein das Widerlager umgreifender Ringkörper ausgebildet und ein als wenigstens teilweise hohles Formteil ausgebildeter Handbremshebel starr und unlösbar mit der Seilscheibe verbunden ist. Im Rahmen der Verwirklichung einer erfindungsgemäßen Handbremse kann aber selbstverständlich auch vorgesehen sein, daß der Handbremshebel mit der Seilscheibe einteilig ausgebildet ist. Das Bremsseil ist zweckmäßigerweise vermittels eines in eine an dieser angebrachten Öse eingreifenden Haltebolzens an die Seilscheibe angeschlossen.

Im Zusammenhang mit der vorstehenden Verwirklichungsform einer Feststelleinrichtung kann hinsichtlich der Ausbildung der Feststellmittel zweckmäßigerweise weiter vorgesehen sein, daß am Außen- bzw. Innenumfang eines der beiden gegeneinander festzustellenden Teile, Seilscheibenring oder Widerlager, drei in Umfangsrichtung aufeinanderfolgende Schulteroberflächen ausgebildet sind und der Innen-bzw. Außenumfangsfläche des anderen Teiles zylindrich ausgebildet ist, derart, daß zwischen den Schulteroberflächen des einen Teiles und der zylindrischen Umfangsfläche des anderen Teiles keilförmige Zwischenräume vorhanden sind, welche in diejenige Richtung hin, in welche sich die Seilscheibe beim Anziehen des Handbremshebels dreht, enger werden und daß in die keilförmigen Zwischenräume ihrerseits komplementär keilförmige Haltekörper, insbesondere Klemmkeile, eingeschaltet sind. In Verbindung mit einer Verwendung solcherart ausgebildeter Klemmkeile kann im Interesse einer sicheren Arbeitsweise der Feststelleinrichtung ohne die Gefahr einer Geräuschentwicklung vorteilhafterweise zugleich auch vorgesehen werden, daß jeder der keilförmigen Haltekörper, insbesondere jeder Klemmkeil in Klemmrichtung mittels jeweils einer Feder belastet ist, wobei die Federn durch Schraubenfedern gebildet und jeweils gegen eine die Schulteroberfläche zum erweiterten Ende der keilförmigen Zwischenräume hin begrenzende radiale Flanke abgestützt sind.

Um beständige Feststell- bzw. Halteeingenschaften der Überholkupplung bzw. Freilaufanordnung gewährleisten zu können ist im weiteren zweckmäßigerweise noch vorgesehen, daß sich die Schulteroberflächen spiralförmig erstrecken und ihre jeweiligen Kreismittelpunkte zur Achse der zueinander konzentrischen Teile der Feststelleinrichtung versetzt angeordnet sind und daß jeder der keilförmigen Zwischenräume einen Keilwinkel aufweist, welcher im wesentlichen konstant über die gesamte Kontaktoberfläche hin verläuft.

Um ein Verstellen der Klemmkeile in ihre Lösestellung mit einem vergleichsweise geringen Kraftaufwand zu ermöglichen kann ferner vorgesehen sein, daß die Schulteroberflächen und/oder die diesen zugewandten Flächen der keilförmigen Haltekörper, bzw. der Klemmkeile mit einer Beschichtung zur Verringerung des Reibungsbeiwertes versehen sind.

Eine dem Lösen der Handbremse zugeordnete und willkürlich manuell betätigbare Lösevorrichtung zum Verbringen der Klemmkeile in ihre wirkungslose Stellung sieht vor, daß ein mittels eines am Handbremshebel angeordneten Druckknopfes manuell und willkürlich betätigbares Gestänge oder drucksteifes Kabel antreibbares, gleichzeitig mit sämtlichen der keilförmigen Haltekörper, insbesondere Klemmkeilen, formschlüssig verbundenes Mitnehmerelement vorhanden ist, wobei das Mitnehmerelement zweckmäßigerweise scheibenförmig ausgebildet und zu der Seilscheibe bzw. zu dem Widerlager koaxial angeordnet sowie vermittels jeweils eines Zapfens formschlüssig mit jedem der keilförmigen Haltekörper, insbesondere Klemmkeile, gekoppelt ist.

Das die manuelle Betätigungskraft für die Löseeinrichtung übertragende drucksteife Kabel ist einerseits in an sich gebräuchlicher Weise entgegen der Last einer gegen den Handbremshebel abgestützten Druckfeder verstellbar und andererseits vermittels eines Mitnehmerbolzens mit dem scheibenförmigen Mitnehmerelement verbunden.

Die Erfindung ist in der nachfolgenden Beispielsbeschreibung anhand eines in der Zeichnung dargestellten Ausführungsbeispieles im Einzelnen beschrieben.

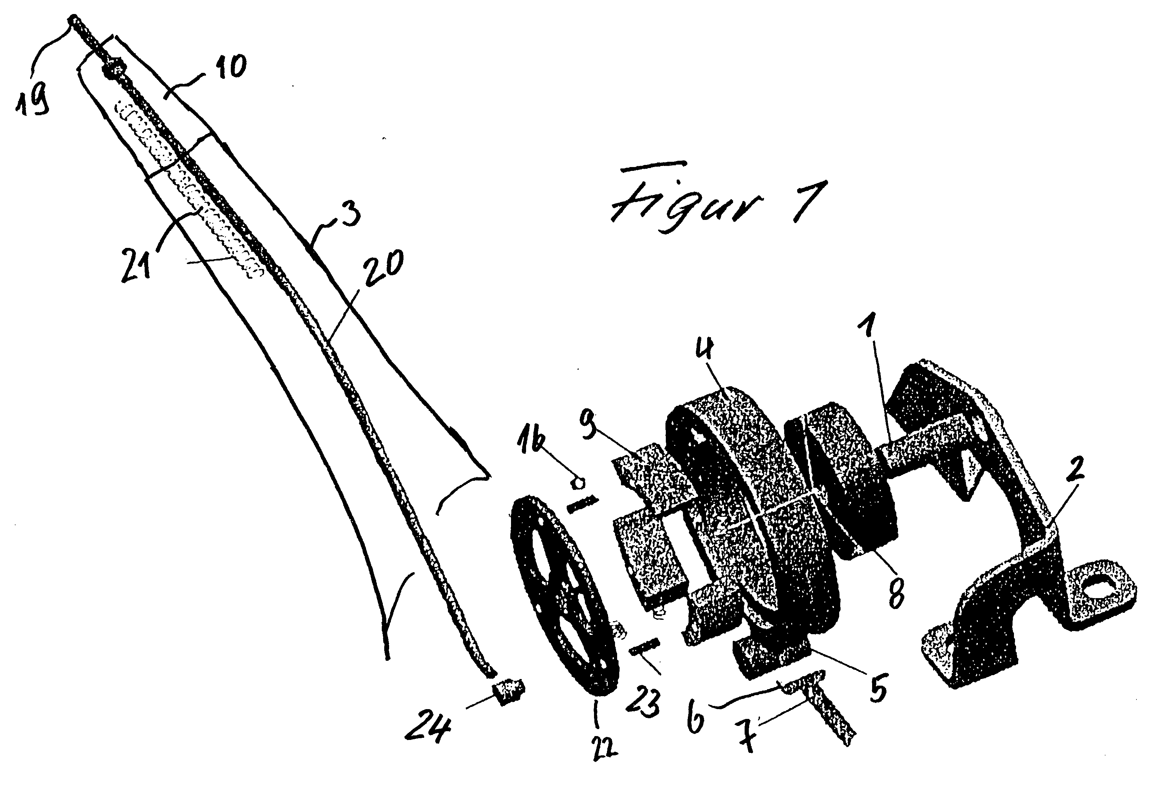

- Fig. 1: zeigt eine Explosionsdarstellung einer mit einer kraftschlüssig wirkenden Feststelleinrichtung ausgestatteten Seilzug-Handbremse;

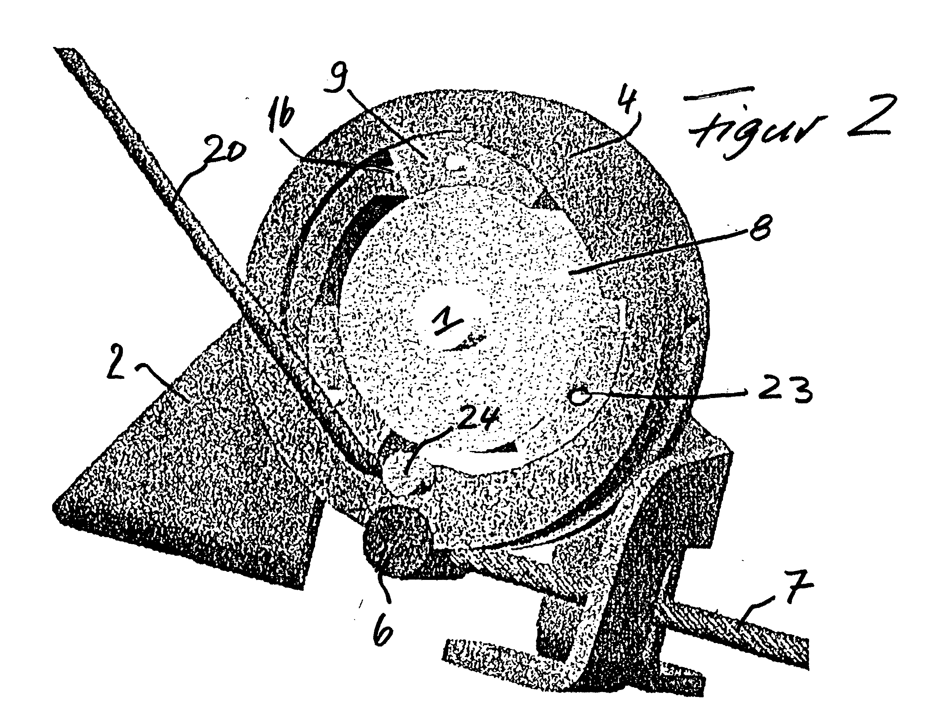

- Fig. 2: zeigt eine schaubildliche Darstellung der mit einer kraftschlüssig wirkenden Feststelleinrichtung ausgestatteten Seilzug-Handbremse gemäß Fig. 1;

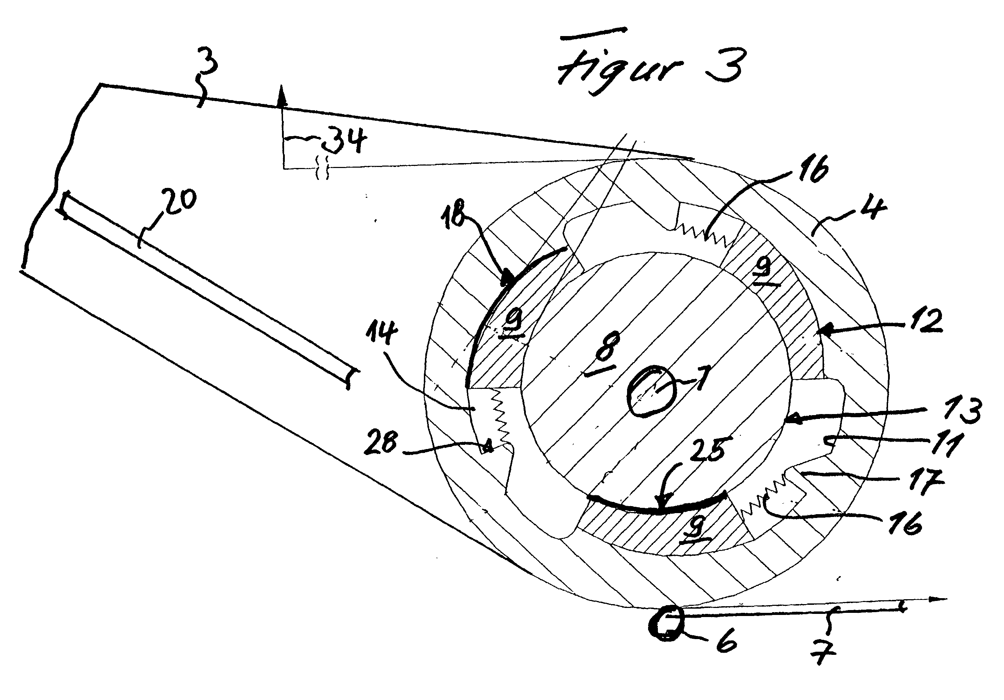

- Fig. 3: zeigt eine Seitenansicht der Feststelleinrichtung für eine Handbremse gemäß Fig. 1, gleichfalls im vergrößerten Maßstab.

Die im Ausführungsbeispiel gezeigte Handbremse umfaßt im Wesentlichen einen um eine Schwenkachse 1 schwenkbar an einem starr an einer in der Zeichnung nicht besonders dargestellten Fahrzeugkarosserie befestigten Brückenträger 2 angelenkten Handbremshebel 3 und eine Seilscheibe 4, welche einerseits mit dem Handbremshebel 3 starr und undrehbar verbunden ist und an welche andererseits vermittels einer Öse 5 und eines Haltebolzens 6 ein mit den Radbremsen in Verbindung stehendes Bremsseil 7 angeschlossen ist. Die Feststelleinrichtung für den Handbremshebel 3 umfaßt hauptsächlich die als ein durch einen Zylinderkörper gebildetes und am Brückenträger 2 starr befestigtes Widerlager 8 umgreifender Ringkörper ausgebildete Seilscheibe 4 sowie drei Klemmkeile 9. Die Seilscheibe 4 und das feststehende Widerlager 8 sind zueinander konzentrisch und ineinandergreifend angeordnet. Der im gezeigten Ausführungsbeispiel mit der Seilscheibe 4 einteilig ausgebildete Handbremshebel 3 ist, wie andeutungsweise dargestellt, als wenigstens teilweise hohles Formteil ausgebildet und an seinem freien Ende mit einem Griffteil 10 versehen. Die Feststelleinrichtung ergibt sich im weiteren daus, daß am Innenumfang 11 des die Seilscheibe 4 bildenden Ringkörpers drei in Umfangsrichtung aufeinanderfolgende Schulteroberflächen 12 ausgebildet sind und die Außenumfangsfläche 13 des Widerlagers 8 glattflächig zylindrisch gestaltet ist, derart, daß sich zwischen den Schulteroberflächen 12 der Seilscheibe 4 und der zylindrischen Außenumfangsfläche 13 des Widerlagers 8 keilförmige Zwischenräume 14 ergeben, welche sich in diejenige Richtung hin, in welche sich die Seilscheibe 4 beim Anziehen der Handbremse (Pfeil 34) dreht, verjüngen und daß in die keilförmigen Zwischenräume 14 ihrerseits komplementär keilförmige Haltekörper, insbesondere Klemmkeile 9, eingeschaltet sind.

Jeder der Klemmkeile 9 ist in Klemmrichtung mittels jeweils einer als Schraubenfeder 16 ausgebildeten Feder belastet, wobei der Abstützung der Schraubenfedern 16 jeweils eine an einem die Schulteroberfläche 12 zum erweiterten Ende der keilförmigen Zwischenräume 14 hin begrenzenden radialen Vorsprung 17 ausgebildete, radiale Flanke 28 zugeordnet ist. In der gezeigten Ausführungsform sind die Klemmkeile 9 zudem an ihren mit den Schulterflächen 12 der Seilscheibe 4 zusammenwirkenden Oberfläche mit einer Beschichtung 18 zur Erhöhung des Reibungsbeiwertes versehen. Um aber andererseits ein Verstellen der Klemmkeile 9 in ihre Lösestellung mit einem vergleichsweise geringen Kraftaufwand zu ermöglichen, sind im gezeigten Ausführungsbeispiel die Schulteroberflächen 14 mit einer Beschichtung 25 zur Verringerung des Reibungsbeiwertes versehen. Der Feststelleinrichtung ist eine manuell betätigbare Lösevorrichtung zum willkürlichen Lösen der Feststellwirkung zugeordnet, wobei die Lösevorrichtung ein mittels eines am Handbremshebel 3 angeordneten Druckknopfes 19 entgegen der Last einer Feder 21 manuell und willkürlich betätigbares drucksteifes Kabel 20 antreibbares, scheibenförmig ausgebildetes Mitnehmerelement 22 umfaßt, welches mit sämtlichen Klemmkeilen 9 formschlüssig verbunden ist. Das Mitnehmerelement 22 ist mit jedem der Klemmkeile 9 vermittels jeweils eines Zapfens 23 formschlüssig gekoppelt. Das die manuelle Betätigungskraft übertragende drucksteife Kabel 20 ist vermittels eines Mitnehmerbolzens 24 mit dem scheibenförmigen Mitnehmerelement 22 verbunden.

## Patentansprüche

1. Seilzug-Handbremse für ein Kraftfahrzeug, mit einem an einem an der Fahrzeugkarosserie befestigbaren Brückenträger (2) angelenkten Handbremshebel (3) und einer mit dem Handbremshebel (3) koppelbaren Einrichtung zur Übertragung der am Handbremshebel (3) in Anzugsrichtung ausgeübten Kräfte auf die Radbremszylinder, wobei der Handbremshebel (3) in unterschiedlichen Anzugsstellungen durch eine mittels eines Druckknopfes (19) sowie eines nachgeschalteten Gestänges (20) auslösbare Feststelleinrichtungen (4, 8, 9) feststellbar ist, wobei eine in den Antriebszug zwischen Handbremshebel (3) und Bremsseil (7) eingeschaltete Feststelleinrichtung (4, 8, 9) eine gegenüber einem feststehenden Widerlager (8) festsetzbare Seilscheibe (4) aufweist, die vermittels einer Überholkupplung bzw. Freilaufanordnung festsetzbar sind, wobei an die Seilscheibe (4) einerseits der Handbremshebel (3) und andererseits das Bremsseil (7) angeschlossen sind und wobei eine willkürlich betätigbare Auslöseeinrichtung (22) für die Feststelleinrichtung (4, 8, 9) vorgesehen ist,
dadurch gekennzeichnet,
daß die Seilscheibe (4) und das feststehende Widerlager (8) als zueinander konzentrische Rotationskörper ausgebildet sind, wobei die Seilscheibe (4) als ein das zylindrisch gestaltete Widerlager (8) umgreifender Ringkörper ausgebildet ist.

2. Seilzug-Handbremse nach Anspruch 1 oder 2, dadurch gekennzeichnet, daß der Handbremshebel (3) als wenigstens teilweise hohles Formteil ausgebildet und starr sowie unlösbar mit der Seilscheibe (4) verbunden ist.

3. Seilzug-Handbremse nach Anspruch 1 oder 2, dadurch gekennzeichnet, daß das Bremsseil (7) vermittels eines in eine an dieser angebrachten Öse (5) eingreifenden Haltebolzens (6) an die Seilscheibe (4) angeschlossen ist.

4. Seilzug-Handbremse nach einem der Ansprüche 1 bis 3, dadurch gekennzeichnet, daß am Außen- bzw. Innenumfang eines der beiden gegeneinander festzustellenden Teile, Seilscheibe (4) oder Widerlager (8), drei in Umfangsrichtung aufeinanderfolgende Schulteroberflächen (12) ausgebildet sind und die Innen- bzw. Außenumfangsfläche des anderen Teils (8, 4) zylindrisch ausgebildet ist, derart, daß zwischen den Schulteroberflächen (12) des einen Teils (4) und der zylindrischen Umfangsfläche des anderen Teils (8) keilförmige Zwischenräume (14) vorhanden sind, welche in diejenige Richtung hin, in welche sich die Seilscheibe (4) beim Anziehen der Handbremse dreht, enger werden, und daß in die keilförmigen Zwischenräume (14) ihrerseits komplementär keilförmige Haltekörper (9) eingeschaltet sind.

5. Seilzug-Handbremse nach Anspruch 4, dadurch gekennzeichnet, daß das jeder der keilförmigen Haltekörper (9) in Klemmrichtung mittels jeweils einer Feder (16) belastet ist, wobei die Federn (16) als Schraubenfedern ausgebildet und jeweils gegen eine die Schulteroberfläche (12) zum erweiterten Ende der keilförmigen Zwischenräume (14) hin begrenzende radiale Flanke (28) abgestützt sind.

6. Seilzug-Handbremse nach Anspruch 4 oder 5, dadurch gekennzeichnet, daß die Schulteroberflächen (12) und/oder die diesen zugewandten Flächen der keilförmigen Haltekörper (9) mit einer Beschichtung (18) zur Verringerung des Reibungsbeiwertes versehen sind.

7. Seilzug-Handbremse nach einem der Ansprüche 4 bis 6, dadurch gekennzeichnet, daß sich die Schulteroberflächen (12) spiralförmig erstrecken und ihre jeweiligen Kreismittelpunkte zur Achse der zueinander konzentrischen Teile (8, 4) der Feststelleinrichtung versetzt angeordnet sind, wobei jeder der keilförmigen Zwischenräume (14) einen Keilwinkel aufweist, welcher im wesentlichen konstant über die gesamte Kontaktoberfläche hin verläuft.

8. Seilzug-Handbremse nach einem der Ansprüche 4 bis 7, dadurch gekennzeichnet, daß die keilfömigen Haltekörper als Klemmkeile (9) ausgebildet sind.

9. Seilzug-Handbremse nach einem der Ansprüche 4 bis 8, dadurch gekennzeichnet, daß die Auslöseeinrichtung mittels eines am Handbremshebel (3) angeordneten Druckknopfes (19) manuell und willkürlich betätigbares Gestänge oder drucksteifes Kabel (20) antreibbares, gleichzeitig mit sämtlichen der keilförmigen Haltekörper (9) formschlüssig verbundenes Mitnehmerelement (22) umfaßt.

10. Seilzug-Handbremse nach Anspruch 9, dadurch gekennzeichnet, daß das Mitnehmerelement (22) scheibenförmig ausgebildet und vermittels jeweils eines Zapfens (23) formschlüssig mit jedem der keilförmigen Haltekörper (9) gekoppelt ist.

11. Seilzug-Handbremse nach Anspruch 10, dadurch gekennzeichnet, daß das die manuelle Betätigungskraft übertragende drucksteife Kabel (20) entgegen der Last einer gegen den Handbremshebel (3) abgestützten Druckfeder (21) verstellbar und vermittels eines Mitnehmerbolzens (24) mit dem scheibenförmigen Mitnehmerelement (22) verbunden ist.

## Claims

1. Cable pull handbrake for a vehicle with a handbrake lever (3) linked to a bridge support (2) which can be fastened to the vehicle body and a device which can be coupled to the handbrake lever (3) for transmitting the forces applied to the handbrake lever (3) in the direction of application onto the wheel brake cylinder, wherein the handbrake lever (3) can be locked in various application positions by locking devices (4, 8, 9) releasable by means of a pushbutton (19) and a downstream linkage (20), wherein a locking device (4, 8, 9) inserted in the drive pull between the handbrake lever (3) and brake cord (7) comprises a pulley (4) which can be fixed opposite a fixed abutment (8), which pulley (4) can be fixed by means of an overrunning clutch or freewheel arrangement, wherein, on the pulley (4), the handbrake lever (3) is connected on one side and the brake cable (7) is connected on the other side and wherein a releasing device (22) which can be randomly actuated is provided for the locking device (4, 8, 9), characterised in that the pulley (4) and the fixed abutment (8) are designed as rotors which are concentric to one another, the pulley (4) being designed as an annular body surrounding a cylindrically formed abutment (8).

2. Cable pull handbrake according to claim 1 or 2, characterised in that the handbrake lever (3) is designed as an at least partially hollow moulded part and is rigidly and permanently connected to the pulley (4).

3. Cable pull handbrake according to claim 1 or 2, characterised in that the brake cable (7) is connected to the pulley (4) by means of a retaining stud (6) engaging in an eye (5) applied to the cable pull handbrake.

4. Cable pull handbrake according to one of claims 1 to 3, characterised in that on the outer or inner periphery of one of the two parts to be locked against one another, pulley (4) or abutment (8), three shoulder surfaces (12) are formed which are in succession in the peripheral direction and the inner or outer peripheral face of the other part (8, 4) is cylindrical in design, in such a way that, between the shoulder surfaces (12) of one of the parts (4) and the cylindrical peripheral face of the other part (8), are wedge-shaped gaps (14) which become narrower in the direction in which the pulley (4) rotates when the handbrake is applied, and in that complementary wedge-shaped retaining bodies (9) are inserted in the wedge-shaped gaps (14).

5. Cable pull handbrake according to claim 4, characterised in that each of the wedge-shaped retaining bodies (9) is loaded in the direction of clamping by means of a spring (16) in each case, the springs (16) being designed as helical springs and supported, in each case, against a radial flank (28) limiting the shoulder surface (12) towards the widened end of the wedge-shaped gaps (14).

6. Cable pull handbrake according to claim 4 or 5, characterised in that the shoulder surfaces (12) and/or the faces facing these of the wedge-shaped retaining bodies (9) are provided with a coating (18) for reducing the friction coefficient.

7. Cable pull handbrake according to one of claims 4 to 6, characterised in that the shoulder surfaces (12) extend helically and their respective centres are arranged offset from the axis of the mutually concentric parts (8, 4) of the locking device, wherein each of the wedge-shaped gaps (14) has a wedge angle which extends substantially constantly over the whole contact surface.

8. Cable pull handbrake according to one of claims 4 to 7, characterised in that the wedge-shaped retaining elements are designed as clamping wedges (9).

9. Cable pull handbrake according to one of claims 4 to 8, characterised in that the release device comprises a driving element (22) which can be driven by means of linkage or a rigid cable (20) which can be randomly and manually actuated by means of a pushbutton (19) arranged on the handbrake lever (3), which driving element (22) is simultaneously connected with interlocking fit to all the wedge-shaped retaining bodies (9).

10. Cable pull handbrake according to claim 9, characterised in that the driving element (22) is disc-shaped in design and can be coupled by a journal (23), in each case, with interlocking fit to each of the wedge-shaped retaining bodies (9).

11. Cable pull handbrake according to claim 10, characterised in that the pressure-rigid cable (20) transmitting the manual actuating force against the load of a compression spring (21) supported against the handbrake lever (3) is adjustable and connected to the disc-shaped driving element (22) by means of a driver stud (24).

## Revendications

1. Frein à main à câble pour un véhicule, avec un levier de frein à main **(3)** articulé sur un longeron **(2)** pouvant se fixer à la carrosserie du véhicule et avec un dispositif pouvant être couplé au levier de frein à main (3) pour transmettre au cylindre de freinage de roues les forces exercées sur le levier de frein à main **(3)** dans la direction de serrage, le levier de frein à main (3) pouvant être immobilisé dans différentes positions de serrage par un dispositif de verrouillage **(4, 8, 9)** pouvant être libéré au moyen d'un bouton poussoir **(19)** et d'une tringlerie **(20)** située à la suite, un dispositif de verrouillage **(4, 8, 9)** placé sur la ligne de serrage entre le levier de frein à main **(3)** et le câble de freinage **(7)** présentant une poulie de câble **(4)** pouvant être immobilisée par rapport à un contre-appui fixe **(8)**, poulie qui peut être immobilisée au moyen d'un accouplement de rattrapage ou d'un dispositif de roue libre, le levier de frein à main **(3)** d'une part et le câble de freinage **(7)** d'autre part étant raccordés à la poulie de câble **(4)** et un dispositif de libération **(22)** actionnable à volonté étant prévu pour le dispositif de verrouillage **(4, 8, 9),**
caractérisé en ce que
la poulie de câble **(4)** et le contre-appui fixe **(8)** sont conformés en corps de rotation concentriques l'un par rapport à l'autre, la poulie de câble **(4)** étant conformée en corps annulaire entourant le contre-appui **(8)** de forme cylindrique.

2. Frein à main à câble selon la revendication 1 ou 2, caractérisé en ce que le levier de frein à main **(3)** est conformé en pièce moulée au moins partiellement creuse et est relié de manière rigide et inamovible à la poulie de câble **(4).**

3. Frein à main à câble selon la revendication **1** ou **2**, caractérisé en ce que le câble de freinage **(7)** est raccordé à la poulie de câble **(4)** au moyen d'une goupille d'arrêt **(6)** s'engageant dans un oeillet **(5)** rapporté sur celle-ci.

4. Frein à main à câble selon l'une des revendications **1** à **3**, caractérisé en ce que, sur la périphérie extérieure ou intérieure de l'une des deux pièces à immobiliser l'une par rapport à l'autre, la poulie de câble **(4)** ou le contre-appui **(8),** sont formées trois surfaces d'épaulement **(12)** se faisant suite dans la direction circonférentielle, et la surface périphérique intérieure ou extérieure de l'autre pièce **(8, 4)** est de conformation cylindrique, de sorte qu'entre les surfaces d'épaulement **(12)** de la première pièce **(4)** et la surface périphérique cylindrique de l'autre pièce **(8),** des interstices cunéiformes **(14)** sont présents, qui se rétrécissent dans la direction dans laquelle la poulie de câble **(4)** tourne quand on serre le frein à main, et en ce que des corps d'arrêt cunéiformes complémentaires **(9)** sont insérés dans les interstices cunéiformes **(14).**

5. Frein à main à câble selon la revendication **4**,
caractérisé en ce que chacun des corps d'arrêt cunéiformes **(9)** est chargé dans la direction de blocage par chacun un ressort **(16)**, les ressorts **(16)** étant conformés en ressorts hélicoïdaux et étant appuyés à chaque fois contre un flanc radial **(28)** délimitant la surface d'épaulement **(12)** en direction de l'extrémité élargie des interstices cunéiformes **(14).**

6. Frein à main à câble selon la revendication **4** ou **5**, caractérisé en ce que les surfaces d'épaulement **(12)** et/ou les surfaces des corps d'arrêt cunéiformes **(9)** tournées vers elles sont munies d'un revêtement **(18)** pour réduire le coefficient de frottement.

7. Frein à main à câble selon l'une des revendications **4** à **6**, caractérisé en ce que les surfaces d'épaulement **(12)** s'étendent en spirale et leurs centres respectifs sont décalés par rapport à l'axe des pièces mutuellement concentriques **(8, 4)** du dispositif de verrouillage, chacun des interstices cunéiformes **(14)** présentant un angle qui s'étend pour l'essentiel de manière constante sur toute la surface de contact.

8. Frein à main à câble selon l'une des revendications **4** à **7**, caractérisé en ce que les corps d'arrêt cunéiformes sont conformés en coins de blocage **(9)**.

9. Frein à main à câble selon l'une des revendications **4** à **8**, caractérisé en ce que le dispositif de libération comprend un élément entraîneur **(22)** actionnable au moyen d'une tringlerie ou d'un câble **(20)** rigide en compression, actionnable manuellement et à volonté par un bouton poussoir **(19)** placé sur le levier de frein à main **(3),** et relié simultanément, en engagement positif, à tous les corps d'arrêt cunéiformes **(9).**

10. Frein à main à câble selon la revendication **9**,
caractérisé en ce que l'élément entraîneur **(22)** est conformé en disque et est couplé en engagement positif avec chacun des corps d'arrêt cunéiformes **(9)** au moyen d'un tenon **(23)** à chaque fois.

11. Frein à main à câble selon la revendication **10,** caractérisé en ce que le câble rigide en compression **(20)** transmettant la force d'actionnement manuelle peut être déplacé contre la force d'un ressort de compression **(21)** appuyé contre le levier de frein à main **(3)** et est relié à l'élément entraîneur en forme de disque **(22)** au moyen d'une goupille d'entraînement **(24).**
